# EUROPEAN PATENT SPECIFICATION

(11) **EP 4 035 896 B1**
(45) Date of publication and mention of the grant of the patent: **26.03.2025**
(21) Application number: 22020028.1
(22) Date of filing: 30.01.2022
(51) Int. Cl.: B33Y 80/00, B33Y 70/00, B33Y 70/10, B33Y 10/00, B29C 64/118, B29C 64/205, B29C 64/227, B29C 64/336, B29C 70/38, B29D 99/00

(54) **A METHOD OF MANUFACTURING COMPOSITE ELEMENTS WITH A HYBRID STRUCTURE, THE PRINT HEAD FOR THEIR MANUFACTURING, AND THE COMPOSITE ELEMENT OF A HYBRID STRUCTURE**
VERFAHREN ZUR HERSTELLUNG VON VERBUNDELEMENTEN MIT HYBRIDSTRUKTUR, DRUCKKOPF ZU DEREN HERSTELLUNG UND VERBUNDELEMENT EINER HYBRIDSTRUKTUR
PROCÉDÉ DE FABRICATION D'ÉLÉMENTS COMPOSITES AVEC UNE STRUCTURE HYBRIDE, TÊTE D'IMPRESSION POUR LEUR FABRICATION, ET ÉLÉMENT COMPOSITE D'UNE STRUCTURE HYBRIDE

(43) Date of publication of application: 03.08.2022
(73) Proprietor: Piasecki, Maciej, 31-347 Kraków (PL)
(72) Inventor: Piasecki, Maciej, 31-347 Kraków (PL)

(56) References cited:
- EP-A1- 3 444 107
- EP-A1- 3 766 668
- WO-A1-2015/073322
- WO-A2-2006/020685
- CN-A- 108 454 131
- US-A1- 2016 176 123

## Description

The subject of the invention is a method of manufacturing composite elements with a hybrid structure, the print head for their production and the composite element with a hybrid structure, applicable in the case of producing components with the required high directional stiffness, mechanical strength with minimal weight.

Components containing composite elements with a hybrid structure are used in the aerospace and automotive industries, and particularly suitable for the production of structures of load-bearing frames, brackets and girders. Invention finds practical application in the manufacturing process of the specialized sport equipment, the elements of which can be flexed for shock absorption, and especially suitable for manufacturing bicycle frames, ski equipment, tennis rackets etc.

So far to obtain a composite element consisting of fibers of high strength parameters and a binder, it was necessary to make a mold for this element, locating in it the pieces of fabric soaked with a binder and subjecting them to the process of curing. In order to obtain the compression against the mold, a vacuum bag is used. In the case of specific elements, the fabric forms can be placed on a core, for example made of foamed plastic, which facilitates laying of fabrics and can provide pressure when closed in the mold. After curing the core binder is removed, for example by chemical dissolution. The limitation of this technology is the time-consuming process and high cost making molds.

The technology of 3D printing with continuous fiber is also known where the single fiber bundle is soaked with resin or melt thermoplastic and extruded by a print head (Continuous Fiber Fused Deposition Modeling, Continuous Fiber FDM). The limitation of this technology is that the fibers are arranged layer by layer only in the printing plane i.e. in the horizontal plane, which in practice limits the use of this method for the production of components characterized by high strength parameters only in one plane.

There is also a known method in which in a single process a core is printed from a thermoplastic material with layers stacked in one plane (Fused Deposition Modeling, FDM) on which it can then be laid a layer of continuous fiber filament with a possibility of directional arrangement of the fibers on the surface of the core. There is also known from the European patent application EP3766668, a method of forming a three-dimensional (3D) structure by using additive manufacturing techniques. The forming is realized by 3D printing machine, including one robot arm equipped with a head for continuous fiber extrusion. Such machine allows for printing 3D composite structure having a sandwich structure with a pair of continuous portions (e.g., surfaces) between which is an intermediate portion defining a series of cells of void space. The limitation of this technology is that it only allows for simplified components shape and that the complexity of the core structure is limited. Also the mass of the core is considerable.

The essence of the print head for the manufacturing of composite elements with a hybrid structure, located on the arm of an industrial robot, which is designed to print composite elements in 3D printing technology, which print head is equipped with a printing unit for printing with continuous fiber, is that the print head according to the invention has at least two mechanical connections of the head, fixing the head to one of the robot arms, and has at least two receiving elements of the energy transmission system. Each of the robotic arms is equipped with a transmitting element of the energy transmission system and a mechanical connection for the arm, which is compatible with each of the mechanical connections of the print head, forming the head mounting element.

Preferably, the element fastening the print head to the robot arm is a pneumatic gripper or a magnetic gripper.

Preferably, the receiving element of the energy transmission system and the transmitting element of the energy transmission system are galvanic contacts or wireless circuits.

Preferably, the print head comprises a printing unit which is adapted to print with only one type of fiber with specific mechanical properties, and for each other type of fiber a separate head or heads are used interchangeably.

The essence of the method of manufacturing composite elements with a hybrid structure having complex shapes such as shapes comprising overhangs or closed sections, using the control algorithm of the print head prepared for printing elements in the 3D technology is that the first step of the method is 3D printing of a construction core with a heterogeneous structure, according to the model and algorithm previously prepared, and then in the second step of the method on the outer surface of the previously prepared construction core, the print-head prints an outer layer consisting of a continuous fiber in a polymer matrix in the 3D technology, so that the fibers are arranged in a directional manner, in accordance with the model and the algorithm previously adapted to control the movement of the print-head for making the outer layer, which said motion comprises passing the print head from one robot arm to the other robot arm.

Preferably, fibers made of artificial muscle-type electric shrink material are embedded in the surface of the structural core.

Preferably, the heterogeneous structure of the structural core is modeled and printed according to an algorithm that takes into account the local mechanical properties of the structural core, optimized with respect to the directional arrangement of the fibers in the outer layer and relating to the strength properties of the outer layer.

Preferably, the directional arrangement of the fibers in the outer layer is determined at the stage of modeling the composite element, taking into account the inhomogeneous mechanical properties of the construction core.

Preferably, the movement of the print head is controlled by two robot arms to which it is alternately mechanically and electrically connected.

Preferably, the structural core is made of material adapted to form a permanent connection with the polymer matrix of the outer layer.

Preferably, the material of the structural core is identical to the polymer matrix of the outer layer.

Preferably, the outer layer comprises different types of fibers with different mechanical parameters situated in the polymer matrix.

Preferably, the fibers of the outer layer are at least two types selected from glass, carbon, aramid, flax, basalt or hemp fibers.

The advantage of the print head according to the invention is its design that allows to reduce its weight and its miniaturization, which in turn allows the use of a robot with a lower payload and reduce energy consumption in the process. This is possible due to the fact that instead of using one large print head equipped with a complex system of reservoirs of different types of fibers, it is possible to use multiple print heads attached to the arm or arms of an industrial robot, where the individual print heads can be equipped with different types of fibers with different mechanical properties. The detachable connection of the print head and the arm or arms of the industrial robot enables the disconnection and attachment of the robot arm head during the printing process, which additionally enables the production of more complex shapes or elements containing closed fragments, e.g. torus or the triangle of the bicycle frame, which would not be possible with the use of a print head permanently attached to the robot arm.

The advantage of the method according to the invention is that it is possible to produce composite elements with a hybrid structure with mechanical properties superior to composite elements made using molds, and the lack of the need for expensive molds allows for significant savings in the production of these elements. In addition, the lack of use of molds allows the production cycle to be significantly accelerated. Compared to known 3D printing technologies, the method according to the invention has the advantage that it enables the production of components with complex shapes, e.g. overhangs, closed shapes, such as e.g. torus, and with any direction of fiber arrangement on the component surface.

The advantage of the composite element with a hybrid structure according to the invention is that the directional arrangement of the fibers of the outer layer of the element in combination with the inhomogeneous distribution of the structure of the structural core allows to increase its strength, because the fragments of the element subjected to larger mechanical loads are characterized by a larger density of the material in the structure of the structural core. The presence of the structural core in the composite element causes that the outer layer of the element, necessary to obtain the required mechanical strength, may be thinner than in the absence of such a core. Moreover, the advantage of a composite element with a hybrid structure is that, through an appropriate arrangement of fibers in the outer layer and the selection of crosslinking of the structure of the structural core, it is possible to obtain an element characterized by high flexibility in strictly defined directions, while maintaining high stiffness in other defined directions.

In the case of a composite element with a hybrid structure, which is equipped with artificial muscle fibers, which are controlled by electrical impulses, the result is an element that flexes in the directions with a given, high flexibility. An example of such an element is the wing of an airplane that can be steered by deflection of the skeletal of the profile, instead of using movable flaps and ailerons, which makes it possible to simplify the structure of the wing, reduce its weight and improve the glide ratio of the wing.

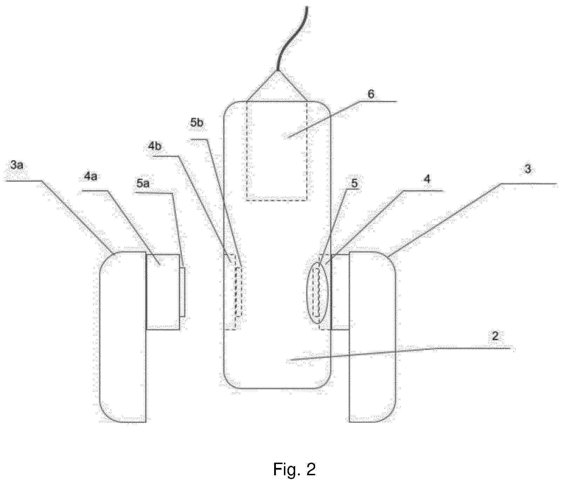

The invention is shown in an exemplary embodiment in the drawing, in which fig. 1 schematically shows the implementation of the method using a print head attached to one of the arms of an industrial robot while printing the outer layer of a composite element, with the second robot arm taking over the print head from the first arm, marked with a dashed line, fig. 2 is a schematic representation of the structure of the print head, fig. 3 shows an exemplary composite hybrid element 1 in a first embodiment of the invention for a bicycle frame fragment, and fig. 4 shows an exemplary composite hybrid element 1' in a second embodiment of the invention for a fragment of a bicycle frame.

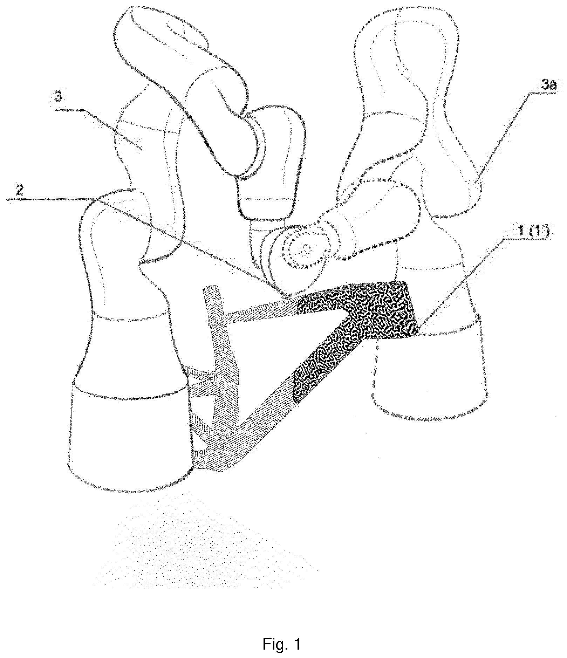

The method of producing the composite element with the hybrid structure 1 begins with the production of the structural core 1a by the method of 3d printing, which is not shown in the drawing. Preferably, the core is obtained in the technology of powder printing: SLS (Selective Laser Sintering, Binder Jetting etc.), which enables printing of complex structures unlimited by the necessity to use supports. In the case of the production of a composite element with a hybrid structure 1', the surface of the core 1'a is additionally equipped with artificial muscle 1c-type electric shrink fibers, which can be implemented for example by arranging them in the recesses within the surface of the core 1'a planned at the design stage and made during the printing process of the core 1'a. After producing the structural core 1a or 1'a, the second step of the method for manufacturing the composite 1 or 1' with hybrid structure is the formation of the outer layer 1b, as shown in Fig. 1. The second stage is carried out by the method of 3D printing with continuous fiber (3dp) infused with a binder and by means of a print head 2, attached to a robot arm 3, controlled by a computer in such a way that the print head 2 arranges the composite fibers on the surface of the structural core 1a or 1'a directionally in a manner consistent with the previously prepared control process and the algorithm of this process. If it is necessary to produce elements with more complex shapes or containing closed fragments such as e.g. a torus or a bicycle frame triangle, it is necessary that at least two robot arms 3 and 3a participate in the printing process and the printing head 2 is connected to them alternately.

Preferably, the material used to print the core is identical to the binder material of the outer layer 1b produced in the second process step, in order to ensure the best adhesion of the core 1a or 1' and the outer layer 1b. Preferably, the construction material of the core 1a or 1'a and the binder of the outer layer 1b is a thermoplastic material which, apart from favorable mechanical properties, is easy to recycle. For example, such a binder is polyamide (PA), ABS (Acrylonitrile Butadiene Styrene), PET (Polyethylene Terephthalate), PLA (Polylactide).

A print head 2 for the manufacturing of composite elements with a hybrid structure 1 or 1 'placed on at least one arm 3, 3a of an industrial robot (Fig. 1), which is intended to perform 3D printing of composite elements with continuous fiber. The print head 2 is equipped with at least two fasteners in the form of mechanical connections of the print head 4b, enabling it to be disconnected by a mechanical connection of the arm 4a from one robot arm, for example 3, and attached to the other arm 3a during the printing process. The mechanical connection of the head 4b and the mechanical connection of the arm 4a form fastening element 4, which enable both the mechanical assembly of the print head 2 to the arms of an industrial robot as well as the power supply of the head 2 and its operation control. In order to ensure easy detachment and attachment of the print head during the printing process, preferably the mechanical fastening element 4 is in the form of a magnetic gripper or a pneumatic gripper. The print head is supplied with energy by means of one of the two electrical connections 5, including a transmitting part 5a on the side of the robot arm 3 or 3a and a receiving part 5b located in the head 2, forming a transmitting-receiving system. The system may be a set of electric contacts. Preferably, the transceiver circuit is a wireless electricity transmission system, for example it is an inductive circuit or a capacitive circuit. The print head is equipped with a known printing unit 6 for printing with a continuous fiber, including an extruding nozzle, a fiber and a polymer container.

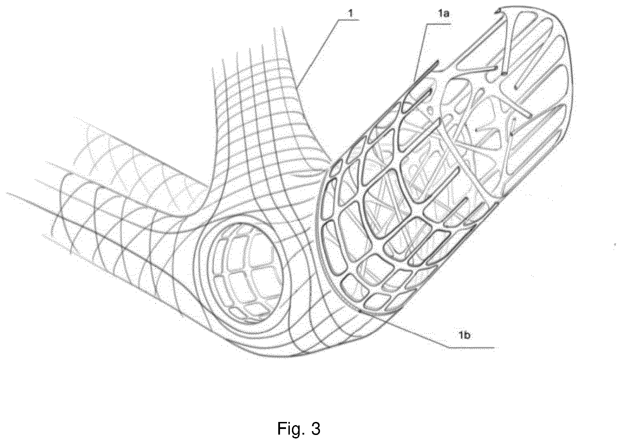

An exemplary composite element with a hybrid structure in a first embodiment of the invention 1 has a structural core 1a with a heterogeneous structure defined at the design stage of the composite element. This structure is shown in Fig. 3 in the form of a supporting core of a spatial arrangement, covered with an outer layer 1b. The heterogeneous structure of the core manifests itself in the fact that the structure has the character of a lattice whose pattern, segment lengths, and material density are different in different parts of the core in such a way as to obtain the desired local mechanical parameters, i.e. stiffness, vibration damping, etc. The outer layer 1b is a composite containing fibers bound by a polymer matrix arranged in an oriented manner in the layer. The orientation of the fibers gives the outer layer special features that significantly improve the quality of the composite element 1. The hybrid structure of the composite element 1, containing the heterogeneous structure of the core 1a and the outer layer 1b with oriented fibers, is a spatial component with a predetermined shape made by two different 3d printing technologies. The mechanical and strength properties of the component made in this way are definitely improved compared to uniform components made in 3D printing technology. The outer layer 1b having oriented fibers bound with a polymer matrix is made in the 3D printing technology with continuous fiber. The structural core 1a is made of a material adapted to form a permanent connection with the polymer matrix of the outer layer 1b.

The material from which the structural core 1a is made may be identical to the matrix of the polymeric outer layer 1b to obtain the best combination of the structural core and the outer layer. In this case, in addition, the recycling of the component is significantly simplified. The outer layer 1b may contain various types of fibers with different mechanical parameters, and the fibers may be selected from glass, carbon, aramid, linen, basalt or hemp fibers for example.

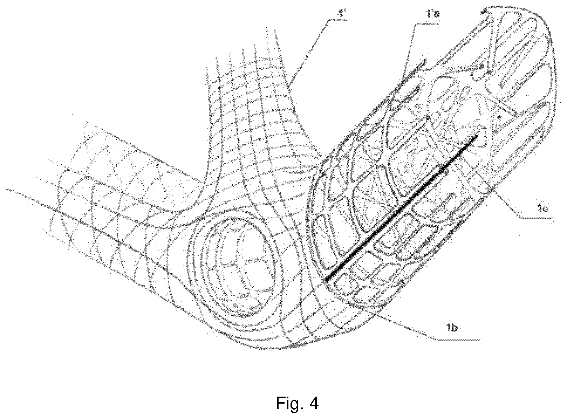

An exemplary composite hybrid structure member in the second embodiment 1 'has a structural core 1' having a heterogeneous structure as in the first embodiment. This structure is shown in Fig. 4 in the form of a supporting core constituting a spatial system, on the surface of which, in the directions susceptible to deflection, fibers 1c are composed of a electro-shrinkable material of the artificial muscle type (artificial muscle), which fibers are controlled, for example by means of electrical pulses, both the electrical connections of the fibers 1c and their control system are not shown in the drawing. The core 1'a with the fibers 1c is covered with the outer layer 1b. The outer layer 1b is a composite comprising fibers bound by a polymer matrix, which are disposed in this layer in a targeted manner, as in the first embodiment of the invention. Fibers of the artificial muscle 1c type and their arrangement on the core 1'a are also defined at the stage of designing the composite element with a hybrid structure 1 'in such a way that the contraction and expansion of the fibers 1c affect the deflection of the composite element 1' in the directions of defined high elasticity.

## Claims

1. A print head for manufacturing composite elements with a hybrid structure which is located on an arm (3, 3a)
of an industrial robot adapted to print composite elements in a 3D printing technology, said print head equipped with a printing unit for continuous fiber printing,
**characterized in that** it has at least two mechanical connections (4b) for fastening the print head (2) to one of the robot arms (3, 3a),
and has at least two receiving elements (5b) of the energy transmission system (5), and each of the robot arms (3, 3a) is equipped with a transmitting element (5a) of the energy transmission system and a mechanical connection for the arm (4a) which is compatible with each of the mechanical connections (4b) of the head (2), which, when connected form the mounting element of the print head (4).

2. The print head according to claim 1, **characterized in that** the mounting element of the print head (4) securing the print head (2) to the robot arm (3, 3a) is a pneumatic gripper or a magnetic gripper.

3. The print head according to claim 1, **characterized in that** the receiving element (5b) of the energy transmission system (5) and the transmitting element (5a) of the energy transmission system (5) are contact circuits or wireless circuits.

4. The print head according to claim 1, **characterized in that** it comprises a printing unit (6) which is adapted to print with only one type of fiber with specific mechanical properties, and for each different type of fiber a separate print head or heads are used, which are used interchangeably.

5. A method of manufacturing composite elements with a hybrid structure having complex shapes such as shapes comprising overhangs or closed sections, using computer modeling for manufacturing of the composite elements and controlling a print head (2) according to algorithms previously prepared for printing elements in a 3D technology, said method comprising the steps of:
- printing a structural core (1a, 1'a) of a heterogeneous structure in accordance with the model and algorithm previously adapted for manufacturing a heterogeneous structure of the core,
- printing by the print head (2), on an outer surface of the structural core (1a, 1'a), an outer layer (1b) with a continuous fiber in a polymer matrix in the 3D technology, wherein the fibers are arranged in a directional manner, according the model and algorithm previously adapted to control the motion of the print head (2) for manufacturing the outer layer (1b), which said motion comprises passing the print head (2) from one robot arm (3) to the other robot arm (3a).

6. The method according to claim 5, including the intermediate step of embedding additional fibers (1c) made of artificial muscle-type electro-shrinkable material within the surface of the structural core (1'a).

7. The method according to claim 5, **characterized in that** the heterogeneous structure of the structural core (1a, 1'a) is modeled and printed according to an algorithm considering local mechanical properties of the structural core (1a, 1'a) respectively, which properties are optimized considering the directional arrangement of the fibers in the outer layer (1b) and relating to the strength properties of the outer layer (1b).

8. The method according to claim 5, **characterized in that** the directional arrangement of the fibers in the outer layer (1b) is determined in the modeling step of the composite element (1, 1'), considering the inhomogeneous mechanical properties of the composite core (1a, 1'a), respectively.

9. The method according to claim 5, **characterized in that** the movement of the print head (2) is controlled by at least two robot arms (3, 3a) with which the head (2) is mechanically and electrically connected alternately.

10. The method according to claim 5, **characterized in that** the structural core (1a, 1'a) is made of a material adapted to form a permanent connection with the polymer matrix of the outer layer (1b).

11. The method according to claim 5, **characterized in that** the material of the structural core (1a, 1'a) is identical to the polymer matrix of the outer layer (1b).

12. The method according to claim 5, **characterized in that** the outer layer (1b) comprises different types of fibers with different mechanical parameters.

13. The method according to claim 5, **characterized in that** the fibers of the outer layer (1b) are at least two types selected from glass, carbon, aramid, linen, basalt or hemp fibers.

## Patentansprüche

1. Ein Druckkopf zur Herstellung von Verbundelementen mit einer hybriden Struktur, der an einem Arm (3, 3a) eines Industrieroboters angebracht ist, der für das Drucken von Verbundelementen in 3D-Drucktechnologie geeignet ist, wobei der Druckkopf mit einer Druckeinheit für den Druck von kontinuierlichen Fasern ausgestattet ist,
**dadurch gekennzeichnet, dass** er mindestens zwei mechanische Verbindungen (4b) zum Befestigen des Druckkopfes (2) an einem der Roboterarme (3, 3a) sowie mindestens zwei Aufnahmeeinheiten (5b) des Energieübertragungssystems (5) aufweist, wobei jeder Roboterarm (3, 3a) mit einem Sendeelement (5a) des Energieübertragungssystems und einer mechanischen Verbindung für den Arm (4a) ausgestattet ist, die mit jeder der mechanischen Verbindungen (4b) des Druckkopfes (2) kompatibel ist und zusammen das Montageelement des Druckkopfes (4) bilden.

2. Der Druckkopf nach Anspruch 1, **dadurch gekennzeichnet, dass** das Montageelement des Druckkopfes (4), das den Druckkopf (2) am Roboterarm (3, 3a) befestigt, ein pneumatischer oder magnetischer Greifer ist.

3. Der Druckkopf nach Anspruch 1, **dadurch gekennzeichnet, dass** die Aufnahmeeinheit (5b) des Energieübertragungssystems (5) und das Sendeelement (5a) des Energieübertragungssystems (5) Kontaktkreise oder kabellose Kreise sind.

4. Der Druckkopf nach Anspruch 1, **dadurch gekennzeichnet, dass** er eine Druckeinheit (6) umfasst, die für das Drucken mit nur einem Fasertyp mit spezifischen mechanischen Eigenschaften geeignet ist, wobei für jeden unterschiedlichen Fasertyp ein separater Druckkopf oder separate Druckköpfe verwendet werden, die austauschbar eingesetzt werden.

5. Ein Verfahren zur Herstellung von Verbundelementen mit einer hybriden Struktur und komplexen Formen, wie Formen mit Überhängen oder geschlossenen Abschnitten, unter Verwendung von Computermodellierung zur Herstellung der Verbundelemente und Steuerung eines Druckkopfes (2) gemäß zuvor vorbereiteten Algorithmen für den Druck von Elementen in 3D-Technologie, wobei das Verfahren die folgenden Schritte umfasst:
∘ Drucken eines strukturellen Kerns (1a, 1'a) einer heterogenen Struktur entsprechend dem Modell und Algorithmus, die zuvor für die Herstellung einer heterogenen Struktur des Kerns angepasst wurden,
∘ Drucken, mit dem Druckkopf (2), auf einer Außenfläche des strukturellen Kerns (1a, 1'a) einer äußeren Schicht (1b) mit einer kontinuierlichen Faser in einer Polymermatrix in 3D-Technologie, wobei die Fasern in einer gerichteten Weise angeordnet sind, gemäß dem Modell und Algorithmus, die zuvor zur Steuerung der Bewegung des Druckkopfes (2) für die Herstellung der äußeren Schicht (1b) angepasst wurden, wobei diese Bewegung den Übergang des Druckkopfes (2) von einem Roboterarm (3) auf den anderen Roboterarm (3a) umfasst.

6. Das Verfahren nach Anspruch 5, umfassend den Zwischenschritt des Einbettens zusätzlicher Fasern (1c) aus künstlichem, muskelähnlichem elektroverkleinerbarem Material in die Oberfläche des strukturellen Kerns (1'a).

7. Das Verfahren nach Anspruch 5, **dadurch gekennzeichnet, dass** die heterogene Struktur des strukturellen Kerns (1a, 1'a) gemäß einem Algorithmus modelliert und gedruckt wird, der die lokalen mechanischen Eigenschaften des strukturellen Kerns (1a, 1'a) berücksichtigt, wobei diese Eigenschaften in Bezug auf die gerichtete Anordnung der Fasern in der äußeren Schicht (1b) und die Festigkeitseigenschaften der äußeren Schicht (1b) optimiert werden.

8. Das Verfahren nach Anspruch 5, **dadurch gekennzeichnet, dass** die gerichtete Anordnung der Fasern in der äußeren Schicht (1b) während des Modellierungsschritts des Verbundelements (1, 1') bestimmt wird, wobei die inhomogenen mechanischen Eigenschaften des Verbundkerns (1a, 1'a) berücksichtigt werden.

9. Das Verfahren nach Anspruch 5, **dadurch gekennzeichnet, dass** die Bewegung des Druckkopfes (2) von mindestens zwei Roboterarmen (3, 3a) gesteuert wird, mit denen der Druckkopf (2) mechanisch und elektrisch abwechselnd verbunden ist.

10. Das Verfahren nach Anspruch 5, **dadurch gekennzeichnet, dass** der strukturelle Kern (1a, 1'a) aus einem Material besteht, das geeignet ist, eine dauerhafte Verbindung mit der Polymermatrix der äußeren Schicht (1b) zu bilden.

11. Das Verfahren nach Anspruch 5, **dadurch gekennzeichnet, dass** das Material des strukturellen Kerns (1a, 1'a) mit der Polymermatrix der äußeren Schicht (1b) identisch ist.

12. Das Verfahren nach Anspruch 5, **dadurch gekennzeichnet, dass** die äußere Schicht (1b) verschiedene Arten von Fasern mit unterschiedlichen mechanischen Parametern enthält.

13. Das Verfahren nach Anspruch 5, **dadurch gekennzeichnet, dass** die Fasern der äußeren Schicht (1b) mindestens zwei Typen umfassen, die aus Glasfasern, Kohlenstofffasern, Aramidfasern, Leinenfasern, Basaltfasern oder Hanffasern ausgewählt sind.

## Revendications

1. Une tête d'impression pour la fabrication d'éléments composites avec une structure hybride, située sur un bras (3, 3a) d'un robot industriel adapté à l'impression d'éléments composites en technologie d'impression 3D, ladite tête d'impression étant équipée d'une unité d'impression pour l'impression de fibres continues,
**caractérisée en ce qu'**elle comporte au moins deux connexions mécaniques (4b) pour fixer la tête d'impression (2) à l'un des bras du robot (3, 3a), et comporte au moins deux éléments récepteurs (5b) du système de transmission d'énergie (5), chaque bras du robot (3, 3a) étant équipé d'un élément émetteur (5a) du système de transmission d'énergie et d'une connexion mécanique pour le bras (4a), compatible avec chacune des connexions mécaniques (4b) de la tête (2), formant ainsi, une fois connectés, l'élément de montage de la tête d'impression (4).

2. La tête d'impression selon la revendication 1, **caractérisée en ce que** l'élément de montage de la tête d'impression (4), fixant la tête d'impression (2) au bras du robot (3, 3a), est une pince pneumatique ou une pince magnétique.

3. La tête d'impression selon la revendication 1, **caractérisée en ce que** l'élément récepteur (5b) du système de transmission d'énergie (5) et l'élément émetteur (5a) du système de transmission d'énergie (5) sont des circuits de contact ou des circuits sans fil.

4. La tête d'impression selon la revendication 1, **caractérisée en ce qu'**elle comprend une unité d'impression (6) adaptée à imprimer avec un seul type de fibre aux propriétés mécaniques spécifiques, une tête ou des têtes d'impression distinctes étant utilisées de manière interchangeable pour chaque type de fibre différent.

5. Un procédé de fabrication d'éléments composites avec une structure hybride ayant des formes complexes, telles que des formes comprenant des surplombs ou des sections fermées, utilisant la modélisation informatique pour la fabrication des éléments composites et contrôlant une tête d'impression (2) selon des algorithmes préalablement préparés pour l'impression d'éléments en technologie 3D, ledit procédé comprenant les étapes suivantes :
∘ imprimer un noyau structurel (1a, 1'a) d'une structure hétérogène conformément au modèle et à l'algorithme préalablement adaptés pour fabriquer une structure hétérogène du noyau,
∘ imprimer, à l'aide de la tête d'impression (2), sur une surface extérieure du noyau structurel (1a, 1'a), une couche extérieure (1b) composée de fibres continues dans une matrice polymère en technologie 3D, les fibres étant disposées de manière directionnelle, conformément au modèle et à l'algorithme préalablement adaptés pour contrôler le mouvement de la tête d'impression (2) pour fabriquer la couche extérieure (1b), ledit mouvement comprenant le transfert de la tête d'impression (2) d'un bras de robot (3) à un autre bras de robot (3a).

6. Le procédé selon la revendication 5, comprenant l'étape intermédiaire consistant à intégrer des fibres supplémentaires (1c) en matériau électro-contractile de type muscle artificiel dans la surface du noyau structurel (1'a).

7. Le procédé selon la revendication 5, **caractérisé en ce que** la structure hétérogène du noyau structurel (1a, 1'a) est modélisée et imprimée selon un algorithme tenant compte des propriétés mécaniques locales du noyau structurel (1a, 1'a), ces propriétés étant optimisées en fonction de la disposition directionnelle des fibres dans la couche extérieure (1b) et des propriétés de résistance de la couche extérieure (1b).

8. Le procédé selon la revendication 5, **caractérisé en ce que** la disposition directionnelle des fibres dans la couche extérieure (1b) est déterminée lors de l'étape de modélisation de l'élément composite (1, 1'), en tenant compte des propriétés mécaniques inhomogènes du noyau composite (1a, 1'a).

9. Le procédé selon la revendication 5, **caractérisé en ce que** le mouvement de la tête d'impression (2) est contrôlé par au moins deux bras de robot (3, 3a) auxquels la tête (2) est connectée mécaniquement et électriquement de manière alternée.

10. Le procédé selon la revendication 5, **caractérisé en ce que** le noyau structurel (1a, 1'a) est constitué d'un matériau adapté à former une liaison permanente avec la matrice polymère de la couche extérieure (1b).

11. Le procédé selon la revendication 5, **caractérisé en ce que** le matériau du noyau structurel (1a, 1'a) est identique à la matrice polymère de la couche extérieure (1b).

12. Le procédé selon la revendication 5, **caractérisé en ce que** la couche extérieure (1b) comprend différents types de fibres ayant des paramètres mécaniques différents.

13. Le procédé selon la revendication 5, **caractérisé en ce que** les fibres de la couche extérieure (1b) comprennent au moins deux types choisis parmi des fibres de verre, de carbone, d'aramide, de lin, de basalte ou de chanvre.
